# EUROPEAN PATENT SPECIFICATION

(11) **EP 4 331 190 B1**
(45) Date of publication and mention of the grant of the patent: **08.04.2026**
(21) Application number: 22726680.6
(22) Date of filing: 29.04.2022
(51) Int. Cl.: H04L 12/40

(54) **A CONTROL SYSTEM**
STEUERUNGSSYSTEM
SYSTÈME DE COMMANDE

(30) Priority: 30.04.2021 GB 202106228
(43) Date of publication of application: 06.03.2024
(73) Proprietor: Jaguar Land Rover Limited, Coventry, Warwickshire CV3 4LF (GB)
(72) Inventor: ULLAS, Nishanth, Coventry Warwickshire CV3 4LF (GB)
(74) Representative: Jaguar Land Rover Patents Department
(86) International application number: PCT/EP2022/061608
(87) International publication number: WO 2022/229451

(56) References cited:
- EP-A2- 2 810 853
- DE-A1- 102011 004 360

## Description

### TECHNICAL FIELD

The present disclosure relates to a control system, and particularly but not exclusively a control system for controlling operation of at least one peripheral device of a vehicle trim assembly for an automotive vehicle. Aspects of the invention relate to a vehicle trim assembly and an automotive vehicle and to a method.

### BACKGROUND

There is a general trend in the automotive industry of adding functions to vehicles, many of which require the presence of peripheral devices for example input/output devices (I/O devices) such as sensors and actuators at particular locations within the vehicle. However, there is often limited space available within the vehicle for packaging I/O devices.

I/O devices generally communicate with an electronic control unit (ECU) hosting device drivers and application software for controlling their operation. Since the connections between I/O devices and their respective ECUs are not generally suitable for extending long distances within a vehicle, it can be necessary for ECUs to be located in very close proximity to the I/O devices that they control. The need to include ECUs in close proximity to I/O devices may increase the difficulty of packaging I/O devices and their associated electronics in particular locations depending upon space constraints at a particular location particularly with regard to an A-surface (that is a user facing surface) of for example of a component, a subsystem or an assembly, at a particular location of the vehicle.

There is also a general desire to minimise the sizes of vehicle trim package space requirements in order to maximise the space available inside vehicles. However, the desire to minimise trim package space often conflicts with the desire to include I/O devices at convenient locations for the user of the vehicle.

Examples of vehicle subsystems for which it is often desirable to include I/O devices in vehicle regions with limited package space availability include vehicle trim assemblies such as steering wheels, centre consoles, overhead consoles, rear view mirrors, door trims and sunroof assemblies.

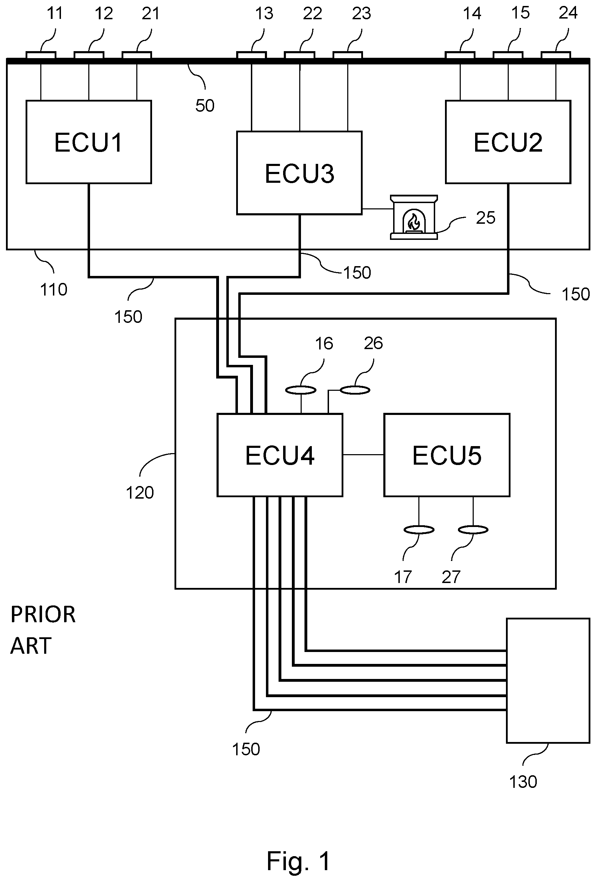

For example, Figure 1 schematically illustrates a prior art steering wheel assembly 110 including a plurality of I/O devices. In particular, the steering wheel assembly 110 comprises input devices including sensors 11-15 in the form of user operable control elements such as buttons, switches or gesture detection devices, some of which are provided as viewed by a driver of the vehicle when the vehicle is being driven forwards in a straight line, on the left hand side, some on the right hand side, and some towards the centre of the steering wheel assembly 110. Other types of input devices may, for example, include temperature sensors, light sensors, cameras, motion sensors or position sensors. In addition to input devices 11-15, the steering wheel assembly 110 comprises output devices including actuators 21-24 in the form of light emitting diode (LED) lights for illuminating the left and right-side control elements, and actuator 25 in the form of a steering wheel heater. A steering wheel column assembly 120 similarly comprises several I/O devices, possibly including sensors 16, 17, such as wheel angle sensors or actuators 26, 27 such as a steering column lock, or a steering power assistor motor.

Some I/O devices 11-17, 21-27 may be directly mounted onto their respective ECUs, while other I/O devices 11-17, 21-27 are connected via external cables which may be kept short to avoid electromagnetic interference. When more functions are to be integrated into the steering wheel assembly 110, the circuit boards carrying the ECUs grow accordingly, making it more difficult to package the ECUs close to the A-surface 50 within the available package space due in part to the A-surface 50 requirements. Since the I/O devices of the steering wheel assembly 110 are split into multiple device clusters at different locations on the steering wheel assembly 110, it would be difficult for all of these I/O devices to be connected to a single ECU, which would necessarily be spaced apart from at least two of the device clusters. Also, when different device clusters are sourced from different suppliers, they may be controlled by separate ECUs. For these and other reasons, the steering wheel assembly 110 of Figure 1 includes three separate ECUs. In particular, the steering wheel assembly 110 includes a first ECU ECU1 that is connected to and configured to control operation of the right hand side I/O devices, a second ECU ECU2 that is connected to and configured to control operation of the left hand side I/O devices, and a third ECU ECU3 that is connected to and configured to control operation of the central I/O devices including the heater 25.

Each of the above-mentioned ECUs is a, standalone ECU that includes its own microprocessor and memory, which may be integrated in a microcontroller forming part of the ECU. Each ECU further comprises its own software stack, including an operating system, application software, diagnostics software and device drivers.

As shown in Figure 1, each of the ECUs is connected to a vehicle gateway 130 via a fourth ECU ECU4 and to another ECU ECU5 of the vehicle via the vehicle's main communication network or wiring harness by a respective communication bus line 150. In particular, ECU1 is connected to the vehicle gateway 130 by a first communication bus line, ECU2 is connected to the vehicle gateway by a second communication bus line, and ECU3 is connected to the vehicle gateway by a third communication bus line. In this way the ECUs are each able to communicate with other ECUs of the vehicle that are connected to the vehicle's communication network.

The above-described steering wheel assembly 110 advantageously allows I/O devices to be included at various different locations on the steering wheel assembly 110. However, the need to include three separate ECUs at different locations close to the three main I/O device clusters on the steering wheel presents packaging difficulties, especially for the right and left hand side ECUs which need to be packaged close to the A-surface 50 of the steering wheel assembly 110 at its edges where space is limited. The inclusion of multiple ECUs also presents heat management challenges within the steering wheel assembly 110 and increases the complexity of the vehicle's wiring harness, as well as adding to the overall cost and weight of the steering wheel assembly 110.

It is an aim of the present invention to address disadvantages associated with the prior art.

DE102011004360 discloses a communication system with a computing unit (11) arranged in a central computer (10) and with an electronic circuit (21) that can be controlled by the computing unit. The communication system is arranged in a component (20) which is spatially distant from the central computer (10). The computing unit (11) comprises a first interface (12) for communication with the electronic circuit. The electronic circuit (21) further comprises a second interface (22) for communication with the computing unit, the first and second interfaces (12, 22) being on a clock-synchronous serial data bus (30) with a plurality of signal lines (33, 34, 35, 36). The sections (33', 34', 35', 36') of the plurality of signal lines (33, 34, 35, 36) running between the central computer (10) and the component (20) are designed to transmit the signals with a different transmission method from the clock-synchronous serial data bus (30).

EP2810853 discloses an actuator control apparatus configured such that even when an electronic device that generates an electric signal to be used to control an actuator is provided in the form of a duplexed system, an increase in the number of communication paths between the electronic device and a controller is suppressed. A torque sensor (52) and a rotation angle sensor (53) are each provided in the form of a duplexed system. A torque sensor (52a) and a rotation angle sensor (53b) are connected to a microcomputer (42) via a SPI communication line (61), and a rotation angle sensor (53a) and a torque sensor (52b) are connected to the microcomputer (42) via a SPI communication line (62). The torque sensors (52a, 52b) and the rotation angle sensors (53a, 53b) are connected to the microcomputer (42) via CS communication lines (71 to 74), respectively. By selecting a communication target via a corresponding one of the CS communication lines (71 to 74), the microcomputer (42) is able to receive multiple kinds of electric signals via each one of the SPI communication lines (61, 62).

### SUMMARY OF THE INVENTION

According to an aspect of the invention there is provided a control system for controlling operation of at least one peripheral device of a vehicle trim assembly, the control system comprising an ECU and a signal collection unit (in this patent also called Automotive Peripheral Unit, APU) that is spaced apart from the ECU; wherein the ECU comprises a processor bus connected to a microprocessor and software for controlling operation of the peripheral device, and is configured to communicate with the peripheral device via the signal collection unit; wherein the signal collection unit is connected directly to the processor bus of the ECU, and comprises a driver for providing an interface between the ECU and the peripheral device but does not include any microprocessor configured to control operation of the peripheral device. It is noted that the term 'driver' is here to be generally interpreted as 'an electronic/integrated circuit that supplies input to another electronic/integrated circuit'. For a peripheral output device, this means that the driver 'drives' the output device by relaying control signals from the ECU to the peripheral device. For a peripheral input device, the driver 'drives' an input signal toward the spaced-apart ECU.

It will be appreciated that the signal collection unit being spaced apart from the ECU means that the signal collection unit is provided as a separate unit in a different location to the ECU. However, the signal collection unit may be located within the same vehicle sub-system or trim component as the ECU, and may be located comparatively close to the ECU, for example within 10-15 cm or less for some applications.

By establishing an interface between at least one peripheral device and an ECU that is configured to control operation of the peripheral device from a remote location, the signal collection unit of the present invention may enable a reduction in the number of ECUs required to control the operation of a plurality of peripheral devices.

Since the signal collection unit does not actively control operation of the peripheral device, it is not necessary for the signal collection unit to include any microprocessor, memory, operating system or software in order to enable operation of the peripheral device. Instead of at the signal collection unit, functional elements as the microprocessor, memory, and operating and control software are provided centrally at the separate ECU. The signal collection unit can therefore be designed as a much simpler, smaller, lighter, more reliable and lower cost unit than would be possible for a conventional ECU including active processing devices. The signal collection unit may take the form of a printed circuit board (PCB) including only passive or slave type devices. This may result in several advantages.

For example, it may enable a smaller size of the signal collection unit compared to a conventional ECU. The smaller size may significantly reduce the amount of space that is required in the vicinity of the peripheral device for packaging electronic components, thereby allowing greater design freedom to place peripheral devices in regions of a vehicle where space for packaging electronic components is limited.

In addition, the ability to control the peripheral device using an ECU at a remote location may allow the peripheral device to be connected to and operated by an ECU that may also be responsible for controlling other functions within the vehicle but has spare processing capacity. In this way it may be possible to make more efficient use of the existing computing power within a vehicle and avoid unnecessary duplication of similar or identical hardware and software elements.

It may therefore also possible to introduce additional peripheral devices into a vehicle's architecture, including in new locations away from existing ECUs, without having to include further ECUs in order to control operation of the additional peripheral devices. In this way it may be possible to increase the reliability and/or to minimise the weight and/or minimise the cost penalty associated with adding additional peripheral devices and functions to a vehicle.

Moreover, since the signal collection unit is connected directly to the ECU, it may not be necessary for the signal collection unit to have its own independent connection to the vehicle's main communication network or wiring harness, which would generally be necessary if a conventional ECU was included in its place. Instead, it may only necessary for the main ECU with which the signal collection unit communicates to be connected to a vehicle gateway and to other ECUs of the vehicle, for example via a controller area network (CAN), local interconnect network (LIN), Ethernet or FlexRay bus. In this way it may be possible to minimise the complexity of the vehicle's wiring harness.

Other advantages will also be apparent to the skilled person.

The signal collection unit may include only a passive electronic device, A passive electronic device may be a slave-type device that does not include any independent processing power. This may be possible since active control of the peripheral device may already be provided by the microprocessor or microcontroller of the ECU, so that no further processing power may be required at the location of the signal collection unit.

It is to be appreciated that the signal collection unit may include a plurality of passive electronic devices.

The control system may comprise a plurality of peripheral devices connected to the signal collection unit. The ECU may be configured to communicate with and control operation of each of the peripheral devices via the signal collection unit.

The control system may comprise at least one peripheral device wherein the at least one device may be an input device. It is to be appreciated that the control system may comprise more than one input device. The input device(s) may, for example, comprise one or more user-operable control elements such as buttons, switches, or gesture detection devices. Alternatively, or in addition, the input device(s) may comprise one or more sensors for sensing environmental and/or vehicle parameters, for example one or more temperature sensors, light sensors, cameras, motion sensors or position sensors.

In the case of an input device, controlling operation of the peripheral device may comprise receiving and processing data signals from the input device.

Alternatively, or in addition, the control system may comprise at least one peripheral device wherein the at least one peripheral device may be an output device. It is to be appreciated that the control system may comprise more than one output device. The output device(s) may, for example, comprise one or more light producing units, heaters, motors, or simple speakers or display screens. In one particular example the output device(s) may comprise one or more light producing units that are configured to illuminate one or more user-operable control elements that are also connected to the signal collection unit.

In the case of an output device, controlling operation of the peripheral device may comprise generating control signals for controlling operation of the output device.

The signal collection unit may be mounted onto the PCB of the peripheral device(s).

Alternatively the signal collection unit may be located in close proximity to the device(s). The maximal distance between the signal collection unit and the peripheral device(s) to which it is connected may depend on, e.g., the type of peripheral device, the signal to be transmitted between the two and the type and quality of the cable connection. Such distance constraints typically depend on the processor serial communication technology used. Relevant factors are, e.g., if the signal is analogue, digital, and with or without error correction. The distance between the signal collection unit and the peripheral device(s) to which it is connected may be smaller than the distance between the peripheral devices and the ECU, and may be smaller than the distance between the signal collection unit and the ECU.

The ECU comprises a processor bus connected to the microprocessor of the ECU. The processor bus is configured to allow a direct connection to the signal collection unit. For example, the signal collection unit may be connected directly to the processor bus by connectors and wires that are compatible with the communication interface of the processor bus. In this case the electronic devices of the signal collection unit are also required to be compatible with the communication interface of the processor bus. However, there is no need for the signal collection unit or the ECU to be provided with transceivers in order to enable communication therebetween, and the electronic devices of the signal collection unit are instead able to communicate with the microprocessor of the ECU directly. Establishing a direct connection between the signal collection unit and the processor bus of the ECU may allow for faster and more reliable communication between the electronic devices of the signal collection unit and the microprocessor of the ECU.

The processor bus may be a Serial Peripheral Interface (SPI) bus. The use of a SPI bus may be advantageous especially for applications in which there may be multiple peripheral devices connected to the signal collection unit since a SPI bus enables a high speed connection to be established with multiple devices using a single electronic circuit. In this case the drivers hosted on the signal collection unit should be SPI based drivers.

The processor bus may be a Universal Serial Bus (USB) bus. The use of a USB bus may be advantageous for applications in which there may be only a single peripheral device connected to the signal collection unit, in which the control system may be required to operate in an environment with high electromagnetic interference and/or in which the distance between the signal collection unit and the ECU may be higher than would be permitted for a SPI bus due to the increased interference resistance provided by a USB bus.

Alternatively, where the direct connection between the signal collection unit and the processor bus of the ECU may be made difficult, for example due to the distance between the signal collection unit and the ECU or the level of electromagnetic interference, transceivers or coupling circuits may be added, for example using isoSPI, RS-422 or RS-485, to improve the electrical characteristics of the signals. In this case the signal collection unit and the ECU may each include a transceiver for facilitating communication therebetween using the selected communication interface.

The control system may comprise a plurality of the signal collection units, each signal collection unit being connected to at least one peripheral device. The ECU may be configured to communicate with and control operation of at least one peripheral device via each of the signal collection units. In this way it may be possible to connect peripheral devices or clusters of peripheral devices at multiple different locations to a single ECU, thereby eliminating the need for additional ECUs at the locations of each peripheral device or device cluster.

Each of the signal collection units may be connected to the ECU either by a separate dedicated or by a common communication bus. For example, each of the signal collection units may be connected directly to the processor bus of the ECU. In this way the number of communication busses required for connecting the signal collection units to the ECU may be minimised.

According to a further aspect of the present invention there is provided a vehicle trim assembly comprising a control system as described above. The vehicle trim assembly may, for example, be a steering wheel assembly. However, it will be appreciated that the control system of the present invention may equally be applied to many other vehicle subsystems, including, for example, to a centre console, overhead console, rear view mirror, door trim, a sunroof assembly.

According to a further aspect of the present invention there is provided an automotive vehicle comprising a control system as described above.

The automotive vehicle may comprise a vehicle trim assembly as described above.

According to a further aspect of the present invention there is provided a method of controlling operation of at least one peripheral device of an automotive vehicle, the method comprising: running software for controlling operation of the peripheral device on a microprocessor located on an ECU of the vehicle, wherein the ECU comprises a processor bus connected to the microprocessor, and communicating with the peripheral device via a signal collection unit that is spaced apart from the ECU; wherein the signal collection unit is connected directly to the processor bus of the ECU, and is configured to transmit output signals from the peripheral device to the ECU for processing and/or to transmit instruction signals from the ECU to the peripheral device, but does not include any microprocessor configured to control operation of the peripheral device.

According to a further aspect of the present invention there is provided a non-transitory, computer-readable storage medium storing instructions thereon that, when executed by one or more electronic processors, causes the one or more electronic processors to carry out the method herein described.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

One or more embodiments of the invention will now be described, by way of example only, with reference to the accompanying drawings, in which:
Figure 1 schematically shows a control system as known from the prior art;
Figure 2 schematically shows an embodiment of a control system according to an embodiment of the invention;
Figure 3 schematically shows an automotive peripheral unit for use in the control system of Figure 2; and
Figure 4 illustrates a vehicle comprising an embodiment of the invention.

### DETAILED DESCRIPTION

A control system 100 for controlling operation of at least one peripheral device 11-17, 21-27 of a vehicle trim assembly 120 for an automotive vehicle 300 in accordance with an embodiment of the present invention is described herein with reference to the accompanying figures.

Figure 1 schematically shows a control system as known from the prior art. The control system is used to control a plurality of I/O devices in a steering wheel assembly 110 and steering wheel column 120 of an automotive vehicle. In particular, the steering wheel assembly 110 includes sensors 11-15 in the form of user operable control elements such as buttons, switches or gesture detection devices, some of which are provided on the left side, some on the right side, and some towards the centre of the steering wheel assembly 110. Such user operable sensors 11-15 may form part of a user interface provided for controlling, for example, an on-board audio entertainment system, advanced driver-assistance (ADAS) systems, or one of the many other vehicle subsystems a driver might want to control while driving. In addition to user operable control elements, the plurality of I/O devices may include sensors that are not user operable or at least not strictly user operable, such as temperature sensors or light sensors. In addition to sensors that provide input to the control system, the steering wheel assembly 110 includes actuators 21-25, for example in the form of LED lights for illuminating the left and right-side control elements or a steering wheel heater 25. A steering wheel column assembly 120 similarly comprises several I/O devices, possibly including sensors 16, 17, such as a wheel angle sensors or actuators 26, 27 such as a key lock or a steering power assistor motor.

Because of space constraints, design preferences and ease of use considerations, the I/O devices 11-17, 21-27 are advantageously provided at various locations on and in the steering wheel assembly 110 and the steering wheel column 120. Consequently, not all I/O devices 11-17, 21-27 can be serviced and controlled by a single control unit on a single PCB (printed circuit board). To avoid having to provide separate PCBs and control units for each I/O device 11-17, 21-27, are grouped in multiple device clusters, each connected to a single electronic control unit ECU1-ECU5. In this example, the steering wheel assembly 110 includes three separate ECUs. In particular, the steering wheel includes a first ECU ECU1 that is connected to and configured to control operation of the right side I/O devices 11, 12, 21, a second ECU ECU2 that is connected to and configured to control operation of the left side I/O devices 14, 15, 24, and a third ECU ECU3 that is connected to and configured to control operation of the central I/O devices 13, 22, 23, 25 including the heater 25. Two I/O device clusters in the steering wheel column 120 are connected to two further ECUs ECU4, ECU5.

The need to include multiple separate ECUs at different locations close to the main I/O device clusters presents packaging difficulties, especially for the right and left side ECUs ECU1, ECU2 on the steering wheel assembly 110 which need to be packaged close to the A-surface 50 of the steering wheel assembly 110 at its edges where space is limited. The inclusion of multiple ECUs also presents heat management challenges within the steering wheel assembly 110 and increases the complexity of the vehicle's wiring harness, as well as adding to the overall cost and weight of the steering wheel assembly 110.

Each of the above-mentioned ECUs ECU1-ECU5 is a traditional, standalone ECU that includes its own microprocessor and memory, which may be integrated in a microcontroller forming part of the ECU. Each ECU further comprises its own software stack, including an operating system, application software, diagnostics software, and device drivers.

As shown in Figure 1, each of the ECUs is connected to a vehicle gateway 130 and to other ECUs of the vehicle via the vehicle's main communication network or wiring harness by a respective communication bus line 150 and ECU4. In particular, ECU1 is connected to the vehicle gateway 130 by a first communication bus line, ECU2 is connected to the vehicle gateway 130 by a second communication bus line, and ECU3 is connected to the vehicle gateway 130 by a third communication bus line. A fourth and a fifth bus line 150 connect the ECUs ECU4, ECU5 in the steering wheel column 120 to the vehicle gateway 130. In this way the five ECUs are each able to communicate with other ECUs of the vehicle 300 that are connected to the vehicle's communication network.

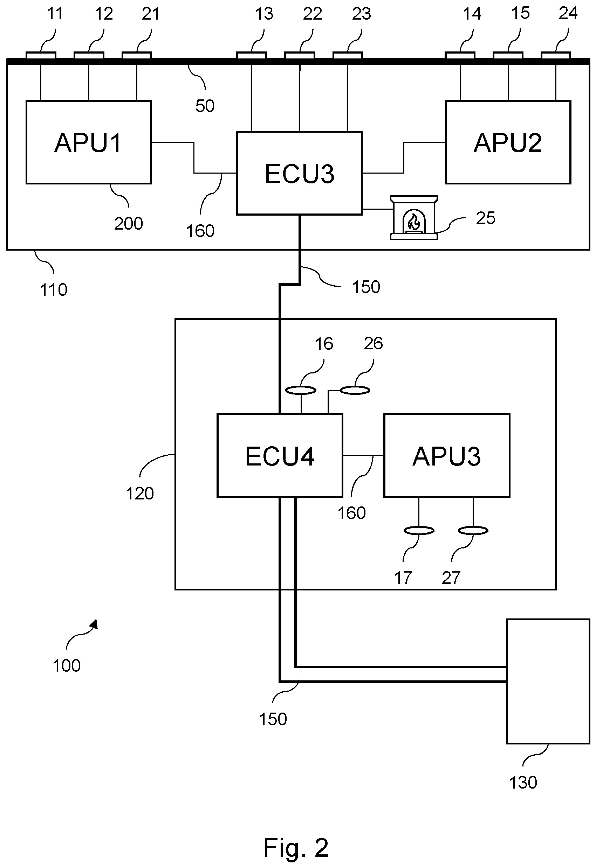

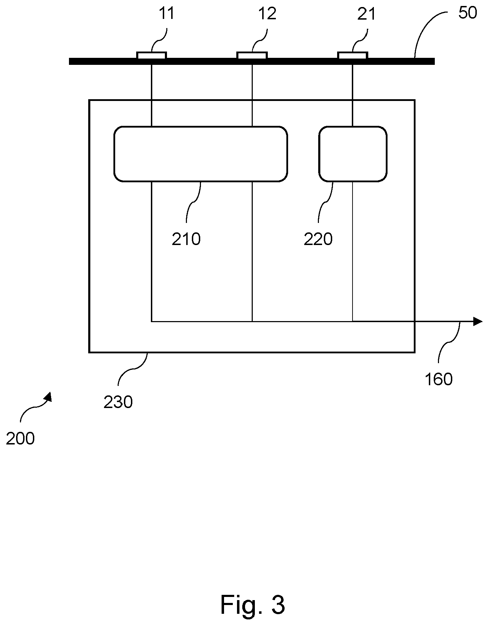

Figure 2 schematically shows an embodiment of a control system 100 according to the invention. Compared to the control system of Figure 1, three of the five ECUs (ECU1, ECU2 and ECU5) have been replaced by signal collection units or automotive peripheral units APU1, APU2, APU3. As will be explained in more detail below with reference to Figure 3, these APUs do not include any microprocessor configured to control operation of the I/O devices 11-12, 14, 17, 21, 24, 27 they serve and can therefore be provided on significantly smaller PCBs that are easier to integrate in a steering wheel assembly 110, steering wheel column 120 or other vehicle subsystems. This is a particular welcome advantage for those peripheral I/O devices 11-15, 21-24 that are located close to or integrated into an A-surface 50 and for which there is even less space available. The use of APUs thereby allows for a greater design freedom to place peripheral devices in regions of a vehicle 300 where space for packaging electronic components is limited.

The automotive peripheral units APU1, APU2, APU3 are each coupled to a single nearby electronic control unit ECU3, ECU4. Each APU may serve one or more of the I/O devices 11-27 and multiple APUs may be coupled to a single ECU. Although the APUs and the ECUs are separate units, provided on separate PCBs, they may be located in the same vehicle sub-system or trim element, and may be located comparatively close to each other, for example within 30 cm of less for some applications. The serial communication bus of the ECU processor may be configured such that a direct connection between the APU and the ECU can be established by a simple data communication line 160. The APU may either be powered by the ECU via the same line 160, or independently and directly from a vehicle battery.

The physical properties of and the communication interface used for the communication line 160 may depend on the distance that has to be bridged between the APU and its respective ECU. If the APU is, for example, mounted about 5cm or less from the ECU and the mounting locations are relatively free from electromagnetic interference, then an SPI bus running over a controlled impedance shielded flat cable could be used to interconnect the APU to its ECU. If the APU is mounted approximately a meter away and there is significant electromagnetic interference, then USB could be chosen for this communication line 160. An alternative solution for enabling reliable long distance connectivity could, for example, be to use isoSPI or RS-422 or RS-485 drivers or another suitable driver(s) to improve noise immunity. In this case the native SPI will be converted to selected standard bus using appropriate transceivers. The conversion may be done at the APU as well as at the ECU.

By establishing the APU as an interface between at least one peripheral I/O device 11-17, 21-27 and an ECU that is configured to control operation of the peripheral device 11-17, 21-27 from a remote location, the present invention eliminates the need for the peripheral device to be provided with its own dedicated ECU at the location of the peripheral device 11-27. As is apparent from Figure 2, the reduced number of ECUs also leads to a simplified communication bus 150 architecture.

Figure 3 schematically shows an automotive peripheral unit 200 for use in the control system 100 of Figure 2. The APU 200 shown here provides an interface between one of the ECUs and three of the peripheral devices 11, 12, 21 of the steering wheel assembly 110 of Figure 2. The three peripheral devices 11, 12, 21 may, for example be two buttons 11, 12 and one a LED 21. The buttons 11, 12 and the LED 21 are all provided at or near the A-surface 50 for allowing interaction with a user. The APU 200 itself is embodied by a PCB 230 with two drivers 210, 220, providing an interface between the peripheral devices 11, 12, 21 and the ECU. It is noted that the term 'driver' is here to be generally interpreted as 'an electronic/integrated circuit that supplies input to another electronic/integrated circuit'. For the LED 21 or other peripheral output devices, the driver 220 'drives' the output device by relaying control signals from the ECU to the peripheral device 21. For the buttons 11, 12 or other peripheral input devices, the driver 210 'drives' an input signal through the communication line 160 to the ECU. For example, driver 210 may be an SPI based touch controller that can consolidate inputs from switch I/O devices and transmit over SPI for processing in the ECU. The drivers 210, 220 may be configured to convert the signals that are being transferred. Such conversion may, for example, include a conversion from analogue to digital or vice versa, an amplification, a filtering, the addition of an identifier, or a combination of one or more of such signal operations. A driver 210, 220 may interface with a single or with multiple I/O devices 11, 12, 21. A driver 210 directly interfacing with multiple input devices 11, 12 may be configured to combine multiple inputs into a single output.

Since the APU 200 does not actively control operation of the peripheral I/O device 11-17, 21-27, with the ECU instead hosting the microprocessor and all software (including application software and diagnostics software) that is required for controlling operation of the peripheral device 11-27, it is not necessary for the APU 200 to include any microprocessor, memory, operating system or software in order to enable operation of the peripheral device. Any signal processing that may take place on the APU 200 itself, may be realised through simple discrete logic. The APU 200 can thus be designed as a much simpler, smaller, lighter, more reliable and lower cost unit than would be possible for a conventional ECU including active processing devices. In particular, the APU 200 can take the form of a very small, simple passive electronic device PCB 230 including only passive or slave type devices. Such an SPI slave type device may include a low power voltage regulator.

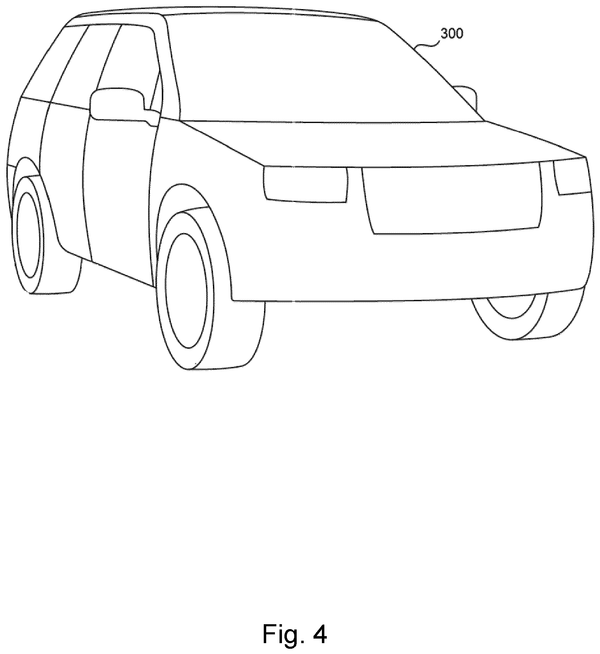

Figure 4 illustrates a vehicle 300 that comprises a control system 100 as described in the preceding paragraphs. The vehicle 300 comprises a vehicle trim assembly 110 as described in the preceding paragraphs.

## Claims

1. A control system (100) for controlling operation of at least one peripheral device (11-17, 21-27) of a vehicle trim assembly (110) the control system (100) comprising an electronic control unit, ECU (ECU1-ECU5), and a signal collection unit (APU1, APU2, APU3) that is spaced apart from the ECU (ECU1-ECU5);
wherein the ECU (ECU1-ECU5) comprises a processor bus (160) connected to a microprocessor, and software for controlling operation of the peripheral device (11-17, 21-27), and the ECU (ECU1-ECU5) is configured to communicate with the peripheral device (11-17, 21-27) via the signal collection unit (APU1, APU2, APU3);
wherein the signal collection unit (APU1, APU2, APU3) is connected directly to the processor bus (160) of the ECU (ECU1-ECU5), and comprises a driver (210, 220) for providing an interface between the ECU (ECU1-ECU5) and the peripheral device (11-17, 21-27) but does not include any microprocessor configured to control operation of the peripheral device (11-17, 21-27).

2. A control system (100) according to claim 1, wherein the signal collection unit (APU1, APU2, APU3) includes only passive electronic devices.

3. A control system (100) according to claim 1 or claim 2, wherein the control system comprises a plurality of peripheral devices (11-17, 21-27) connected to the signal collection unit (APU1, APU2, APU3), wherein the ECU (ECU1-ECU5) is configured to communicate with and control operation of each of the peripheral devices (11-17, 21-27) via the signal collection unit (APU1, APU2, APU3).

4. A control system (100) according to any preceding claim, wherein at least one peripheral device (11-17, 21-27) is an input device.

5. A control system (100) according to any preceding claim, wherein at least one peripheral device is an output device.

6. A control system (100) according to any preceding claim, wherein the signal collection unit (APU1, APU2, APU3) is mounted onto a printed circuit board (230) of the peripheral device(s) (11-17, 21-27).

7. A control system (100) according to any preceding claim, wherein the processor bus (160) is a Serial Peripheral Interface or a Universal Serial Bus.

8. A control system (100) according to any preceding claim, wherein the control system comprises a plurality of the signal collection units (APU1, APU2, APU3), each signal collection unit (APU1, APU2, APU3) being connected to at least one peripheral device (11-17, 21-27), wherein the ECU (ECU1-ECU5) is configured to communicate with and control operation of at least one peripheral device (11-17, 21-27) via each of the signal collection units (APU1, APU2, APU3).

9. A control system (100) according to claim 8, wherein each of the signal collection units (APU1, APU2, APU3) is connected to the ECU (ECU1-ECU5) by a common communication bus (160).

10. A vehicle trim assembly (110) comprising a control system (100) according to any preceding claim.

11. A vehicle trim assembly (110) according to claim 10, wherein the vehicle trim assembly (110) is a steering wheel assembly.

12. An automotive vehicle comprising a control system (100) according to any of claim 1 to claim 9 or the vehicle trim assembly (110) of claim 10 or claim 11.

13. A method of controlling operation of at least one peripheral device of an automotive vehicle, the method comprising:
running software for controlling operation of the peripheral device (11-17, 21-27) on a microprocessor located on an ECU (ECU1-ECU5) of the vehicle, wherein the ECU (ECU1-ECU5) comprises a processor bus (160) connected to the microprocessor, and
communicating with the peripheral device (11-17, 21-27) via a signal collection unit (APU1, APU2, APU3) that is spaced apart from the ECU (ECU1-ECU5);
wherein the signal collection unit (APU1, APU2, APU3) is connected directly to the processor bus (160) of the ECU (ECU1-ECU5), and is configured to transmit output signals from the peripheral device (11-17, 21-27) to the ECU (ECU1-ECU5) for processing and/or to transmit instruction signals from the ECU to the peripheral device (11-17, 21-27), but does not include any microprocessor configured to control operation of the peripheral device (11-17, 21-27).

14. A non-transitory, computer-readable storage medium storing instructions thereon that, when executed by one or more electronic processors, causes the one or more electronic processors to carry out the method of claim 13.

## Patentansprüche

1. Steuersystem (100) zum Steuern eines Betriebs mindestens einer Peripherievorrichtung (11-17, 21-27) einer Fahrzeugverkleidungsanordnung (110), das Steuersystem (100) umfassend eine elektronische Steuereinheit, ECU (ECU1-ECU5), und eine Signalerfassungseinheit (APU1, APU2, APU3), die von der ECU (ECU1-ECU5) beabstandet ist;
wobei die ECU (ECU1-ECU5) einen Prozessorbus (160), der mit einem Mikroprozessor verbunden ist, und Software zum Steuern des Betriebs der Peripherievorrichtung (11-17, 21-27) umfasst, und die ECU (ECU1-ECU5) konfiguriert ist, um mit der Peripherievorrichtung (11-17, 21-27) über die Signalerfassungseinheit (APU1, APU2, APU3) zu kommunizieren;
wobei die Signalerfassungseinheit (APU1, APU2, APU3) direkt mit dem Prozessorbus (160) der ECU (ECU1-ECU5) verbunden ist und einen Treiber (210, 220) zum Bereitstellen einer Schnittstelle zwischen der ECU (ECU1-ECU5) und der Peripherievorrichtung (11-17, 21-27) umfasst, jedoch keinen Mikroprozessor einschließt, der konfiguriert ist, um den Betrieb der Peripherievorrichtung (11-17, 21-27) zu steuern.

2. Steuersystem (100) nach Anspruch 1, wobei die Signalerfassungseinheit (APU1, APU2, APU3) nur passive elektronische Vorrichtungen einschließt.

3. Steuersystem (100) nach Anspruch 1 oder 2, wobei das Steuersystem eine Vielzahl von Peripherievorrichtungen (11-17, 21-27) umfasst, die mit der Signalerfassungseinheit (APU1, APU2, APU3) verbunden sind, wobei die ECU (ECU1-ECU5) konfiguriert ist, um mit jeder der Peripherievorrichtungen (11-17, 21-27) über die Signalsammeleinheit (APU1, APU2, APU3) zu kommunizieren und deren Betrieb zu steuern.

4. Steuersystem (100) nach einem der vorstehenden Ansprüche, wobei mindestens eine Peripherievorrichtung (11-17, 21-27) eine Eingabevorrichtung ist.

5. Steuersystem (100) nach einem der vorstehenden Ansprüche, wobei mindestens eine Peripherievorrichtung eine Ausgabevorrichtung ist.

6. Steuersystem (100) nach einem der vorstehenden Ansprüche, wobei die Signalerfassungseinheit (APU1, APU2, APU3) auf einer Leiterplatte (230) der Peripherievorrichtungen (11-17, 21-27) montiert ist.

7. Steuersystem (100) nach einem der vorstehenden Ansprüche, wobei der Prozessorbus (160) eine serielle Peripherieschnittstelle oder ein universeller serieller Bus ist.

8. Steuersystem (100) nach einem der vorstehenden Ansprüche, wobei das Steuersystem eine Vielzahl der Signalerfassungseinheiten (APU1, APU2, APU3) umfasst, wobei jede Signalerfassungseinheit (APU1, APU2, APU3) mit mindestens einer Peripherievorrichtung (11-17, 21-27) verbunden ist, wobei die ECU (ECU1-ECU5) konfiguriert ist, um mit mindestens einer Peripherievorrichtung (11-17, 21-27) über jede der Signalerfassungseinheiten (APU1, APU2, APU3) zu kommunizieren und deren Betrieb zu steuern.

9. Steuersystem (100) nach Anspruch 8, wobei jede der Signalerfassungseinheiten (APU1, APU2, APU3) mit der ECU (ECU1-ECU5) durch einen gemeinsamen Kommunikationsbus (160) verbunden ist.

10. Fahrzeugverkleidungsanordnung (110), umfassend ein Steuersystem (100) nach einem der vorstehenden Ansprüche.

11. Fahrzeugverkleidungsanordnung (110) nach Anspruch 10, wobei die Fahrzeugverkleidungsanordnung (110) eine Lenkradanordnung ist.

12. Kraftfahrzeug, umfassend ein Steuersystem (100) nach einem der Ansprüche 1 bis 9 oder die Fahrzeugverkleidungsanordnung (110) nach Anspruch 10 oder 11.

13. Verfahren zum Steuern des Betriebs mindestens einer Peripherievorrichtung eines Kraftfahrzeugs, das Verfahren umfassend:
Ausführen von Software zum Steuern des Betriebs der Peripherievorrichtung (11-17, 21-27) auf einem Mikroprozessor, der sich auf einer ECU (ECU1-ECU5) des Fahrzeugs befindet, wobei die ECU (ECU1-ECU5) einen Prozessorbus (160) umfasst, der mit dem Mikroprozessor verbunden ist und
Kommunizieren mit der Peripherievorrichtung (11-17, 21-27) über eine Signalerfassungseinheit (APU1, APU2, APU3), die von der ECU (ECU1-ECU5) beabstandet ist;
wobei die Signalerfassungseinheit (APU1, APU2, APU3) direkt mit dem Prozessorbus (160) der ECU (ECU1-ECU5) verbunden ist und konfiguriert ist, um Ausgangssignale von der Peripherievorrichtung (11-17, 21-27) an die ECU (ECU1-ECU5) zum Verarbeiten zu übertragen und/oder um Anweisungssignale von der ECU an die Peripherievorrichtung (11-17, 21-27) zu übertragen, jedoch keinen Mikroprozessor einschließt, der konfiguriert ist, um den Betrieb der Peripherievorrichtung (11-17, 21-27) zu steuern.

14. Nicht flüchtiges, computerlesbares Speichermedium, das Anweisungen darauf speichert, die, wenn sie durch einen oder mehrere elektronische Prozessoren ausgeführt werden, den einen oder die mehreren elektronischen Prozessoren veranlassen, das Verfahren nach Anspruch 13 vorzunehmen.

## Revendications

1. Système de commande (100) permettant de commander un fonctionnement d'au moins un dispositif périphérique (11-17, 21-27) d'un ensemble garniture de véhicule (110), le système de commande (100) comprenant une unité de commande électronique, ECU (ECU1-ECU5) et une unité de collecte de signaux (APU1, APU2, APU3) qui est espacée de l'ECU (ECU1-ECU5) ;
dans lequel l'ECU (ECU1-ECU5) comprend un bus de processeur (160) connecté à un microprocesseur, et un logiciel pour la commande de fonctionnement du dispositif périphérique (11-17, 21-27), et l'ECU (ECU1-ECU5) est configurée pour communiquer avec le dispositif périphérique (11-17, 21-27) par l'intermédiaire de l'unité de collecte de signaux (APU1, APU2, APU3) ;
dans lequel l'unité de collecte de signaux (APU1, APU2, APU3) est connectée directement au bus de processeur (160) de l'ECU (ECU1-ECU5), et comprend un pilote (210, 220) permettant de fournir une interface entre l'ECU (ECU1-ECU5) et le dispositif périphérique (11-17, 21-27) mais ne comporte pas un quelconque microprocesseur configuré pour commander un fonctionnement du dispositif périphérique (11-17, 21-27).

2. Système de commande (100) selon la revendication 1, dans lequel l'unité de collecte de signaux (APU1, APU2, APU3) comporte uniquement des dispositifs électroniques passifs.

3. Système de commande (100) selon la revendication 1 ou la revendication 2, dans lequel le système de commande comprend une pluralité de dispositifs périphériques (11-17, 21-27) connectés à l'unité de collecte de signaux (APU1, APU2, APU3), dans lequel l'ECU (ECU1-ECU5) est configurée pour communiquer avec chacun des dispositifs périphériques (11-17, 21-27) et commander leur fonctionnement par l'intermédiaire de l'unité de collecte de signaux (APU1, APU2, APU3).

4. Système de commande (100) selon l'une quelconque revendication précédente, dans lequel au moins un dispositif périphérique (11-17, 21-27) est un dispositif d'entrée.

5. Système de commande (100) selon l'une quelconque revendication précédente, dans lequel au moins un dispositif périphérique est un dispositif de sortie.

6. Système de commande (100) selon l'une quelconque revendication précédente, dans lequel l'unité de collecte de signaux (APU1, APU2, APU3) est montée sur une carte de circuit imprimé (230) du ou des dispositifs périphériques (11-17, 21-27).

7. Système de commande (100) selon l'une quelconque revendication précédente, dans lequel le bus de processeur (160) est une interface de périphérique en série ou un bus série universel.

8. Système de commande (100) selon l'une quelconque revendication précédente, dans lequel le système de commande comprend une pluralité d'unités de collecte de signaux (APU1, APU2, APU3), chaque unité de collecte de signaux (APU1, APU2, APU3) étant connectée à au moins un dispositif périphérique (11-17, 21-27), dans lequel l'ECU (ECU1-ECU5) est configurée pour communiquer avec au moins l'un dispositif périphérique (11-17, 21-27) et commander son fonctionnement par l'intermédiaire de chacune des unités de collecte de signaux (APU1, APU2, APU3).

9. Système de commande (100) selon la revendication 8, dans lequel chacune des unités de collecte de signaux (APU1, APU2, APU3) est connectée à l'ECU (ECU1-ECU5) par un bus de communication commun (160).

10. Ensemble garniture de véhicule (110) comprenant un système de commande (100) selon l'une quelconque revendication précédente.

11. Ensemble garniture de véhicule (110) selon la revendication 10, dans lequel l'ensemble garniture de véhicule (110) est un ensemble volant de direction.

12. Véhicule automobile comprenant un système de commande (100) selon l'une quelconque des revendications 1 à 9 ou l'ensemble garniture de véhicule (110) selon la revendication 10 ou la revendication 11.

13. Procédé pour la commande d'un fonctionnement d'au moins un dispositif périphérique d'un véhicule automobile, le procédé comprenant :
l'exécution d'un logiciel permettant de commander un fonctionnement du dispositif périphérique (11-17, 21-27) sur un microprocesseur situé sur une ECU (ECU1-ECU5) du véhicule, dans lequel l'ECU (ECU1-ECU5) comprend un bus de processeur (160) connecté au microprocesseur, et
la communication avec le dispositif périphérique (11-17, 21-27) par l'intermédiaire d'une unité de collecte de signaux (APU1, APU2, APU3) qui est espacée de l'ECU (ECU1-ECU5) ;
dans lequel l'unité de collecte de signaux (APU1, APU2, APU3) est connectée directement au bus de processeur (160) de l'ECU (ECU1-ECU5) et est configurée pour transmettre des signaux de sortie du dispositif périphérique (11-17, 21-27) à l'ECU (ECU1-ECU5) pour traiter et/ou pour transmettre des signaux d'instruction de l'ECU au dispositif périphérique (11-17, 21-27), mais ne comporte pas un quelconque microprocesseur configuré pour commander un fonctionnement du dispositif périphérique (11-17, 21-27).

14. Support de stockage non transitoire lisible par ordinateur stockant des instructions qui, lorsqu'elles sont exécutées par un ou plusieurs processeurs électroniques, amènent le ou les processeurs électroniques à effectuer le procédé selon la revendication 13.
